# EUROPEAN PATENT SPECIFICATION

(11) **EP 0 873 012 B1**
(45) Date of publication and mention of the grant of the patent: **25.07.2007**
(21) Application number: 98302901.8
(22) Date of filing: 15.04.1998
(51) Int. Cl.: H04N 5/63, H04N 3/20

(54) **Image display device**
Bildanzeigevorrichtung
Dispositif d'affichage d'images

(30) Priority: 17.04.1997 JP 9991597
(43) Date of publication of application: 21.10.1998
(73) Proprietor: MATSUSHITA ELECTRIC INDUSTRIAL CO., LTD, Kadoma-shi, Osaka 571-8501 (JP)
(72) Inventor: Watamoto, Toru, Settsu-shi, Osaka 566 (JP); Nagata, Koichiro, Ibaraki-shi, Osaka 567 (JP)
(74) Representative: Crawford, Andrew Birkby

(56) References cited:
- EP-A- 0 822 717
- GB-A- 2 286 917

## Description

### TECHNICAL FIELD OF THE INVENTION

The present invention relates to an image display device for reproducing an image or sound recorded by such recording medium as digital video disc (DVD) and compact disc (CD), and displaying an image from a television receiver (TV).

### BACKGROUND OF THE INVENTION

Conventionally, in an integrated DVD and television receiver with a DVD incorporated therein, even when a stationary image or DVD menu screen is displayed, the stationary image or DVD menu screen is continuously displayed on an image screen until a user cancels the stationary mode, or selects a cursor in the other menu.

In addition, because a power supply to the DVD deck is linked with that of the TV, whenever the power supply to TV is turned on, that to the DVD deck is always turned on.

In such conventional constitution, burn of a screen is caused when such image without any motion as stationary image or DVD menu screen is displayed for a long time.

Even when a user watches a TV picture without using the DVD deck, the power supply to the DVD deck is in the "ON" state, and the DVD deck is, therefore, deteriorated in a shorter time.

EP - A - 0 822 717 is prior art under Article 54(3) EPC and refers to a display device used together with a playback apparatus such as an optical disc. A control is provided for responding to a playback signal from a playback apparatus in order to prevent burn-out of CRT phosphor or deterioration of phosphor. A first and second controller control the playback apparatus and display device respectively, and the controller communicate with each other.

GB - A - 2286917 discloses a method and apparatus for pausing a disc player in a video system. The video system comprises a tuner, CD player, switching means and a monitor. The switching means is used to select a signal from the tuner, an external input or the CD player for display on the monitor. During playback the CD player is connected to the monitor and when a pause command is received, the switch means connects the tuner to the monitor and pauses the CD player such that it continues to trace the same track. If a predetermined period passes the power is switched off otherwise the CD player will restart playback from the same position if the pause command is cancelled.

### SUMMARY OF THE INVENTION

An image display device according to the invention comprises:
(a) first image and sound reproducing means for reproducing at least one of a first image and a first sound;
(b) second image and sound reproducing means for reproducing a second image;
(c) one single display means for displaying the first and second images; and
(d) screen bum preventing means for functioning to discontinue reproduction of said first image when said first image comes to be stationary, and said stationary state continues for a first predetermined time or a longer time, and to cause said first image and sound reproducing means to reproduce only said first sound;
said display means is further provided with an on-screen display means; and
said on-screen display means functions to display such warning image in said display means that indicates ongoing reproduction of said first sound when said first sound is reproduced, and change positioning of said warning image at a periodic interval of a second predetermined time.

It is particularly preferable that the first image and sound reproducing means is at least one selected from a group consisting of DVD deck, VIDEO-CD and CD.

It is particularly preferable that the second image and sound reproducing means is a television receiver (TV).

It is particularly preferable that the display means is a cathode-ray tube, liquid crystal display device or plasma display device.

According to above constitution, a stationary image is prevented from being displayed for a long time, hence burn of the screen of display means is prevented.

Further, when the second image is displayed by the display means, the first image and sound reproducing means is protected, and deterioration of the first image and sound reproducing means is accordingly prevented.

### BRIEF DESCRIPTION OF THE DRAWING

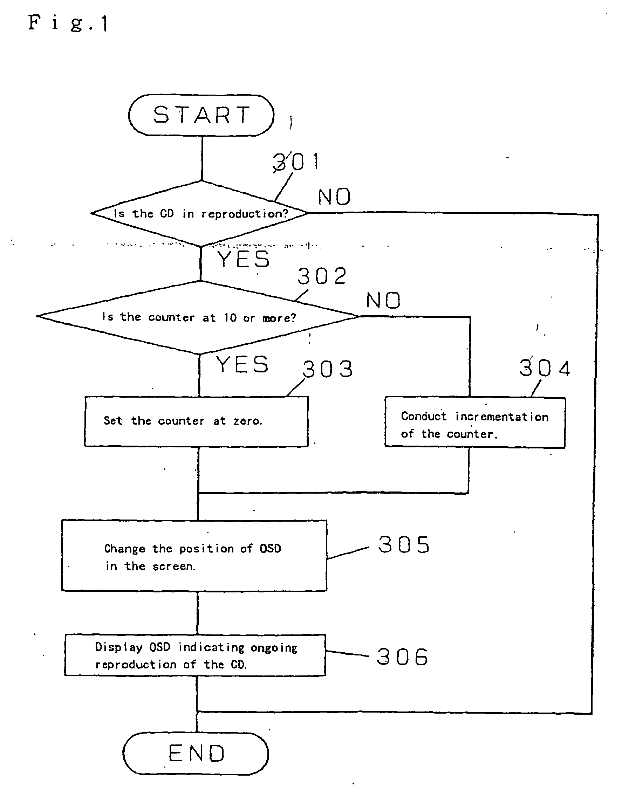

Fig. 1 is a flowchart of software structure in accordance with an embodiment of the invention.
301 Branch of whether the CD is in reproduction or not
362 Branch of whether the counter is at 10 or more or not
303 Set the counter at zero.
304 Incrementation of the counter
305 Change the OSD display position.
306 OSD display for indicating the CD is in reproduction

### DETAILED DESCRIPTION OF THE INVENTION

An image display device according to the invention comprises a DVD deck provided as first image and sound reproducing means, a television receiver provided as second image and sound reproducing means and such image display means as a cathode tube, and further comprises means for preventing burn of a screen that is caused when a stationary image is displayed for a long time in a screen of the image display means and means for protecting the DVD deck when the DVD deck is not used. Because of the constitution, an effect of preventing burn of a screen and protecting the DVD deck can be provided.

The image display device according to the invention comprises, in addition to above-described constitution, means for bringing a disc to a halt when such disc as DVD, VIDEO-CD and CD is maintained in a stationary or paused state for a predetermined period of time during reproduction. As a result of the constitution, burn of a screen caused when an image is maintained in a stationary or paused state for a long time is prevented.

The image display device according to the invention comprises, in addition to above-described constitution, means for discontinuing reproduction of a disc, when a reproducing state of- displaying a DVD disc menu is maintained for a predetermined period of time. According to the constitution, burn of a screen caused when a DVD disc menu is continuously displayed for a long time can be prevented.

The image display device according to the invention comprises means for discontinuing reproduction of a disc when an image input is switched to non-DVD input during reproduction of the disc, and such state is maintained for a predetermined period of time. As a result of the constitution, an effect of discontinuing reproduction of a disc when the user doesn't use the DVD deck, and preventing the DVD deck from being deteriorated in a short time is obtained.

The image display device according to the invention comprises warning means for displaying a warning message (OSD.) in a screen a predetermined time before reproduction of a disc is discontinued. Because of the constitution, an effect of giving a notice of discontinuation of reproduction of the disc to a user can be obtained.

The image display device according to the invention comprises means for turning off a power supply to a deck when a disc of the deck is maintained in a halt state for a predetermined period of time. According to the constitution, an effect of protecting the DVD deck by turning off the power supply to the deck when the DVD deck is not used can be obtained.

The image display device according to the invention comprises means for turning off a power supply to a deck when a disc of the deck is maintained in a waiting state for further reproduction for a predetermined period of time. As a result of the constitution, an effect of protecting the DVD deck by turning off the power supply to the deck when the DVD deck is not used can be obtained.

The image display device according to the invention comprises warning means for giving a warning to a user by displaying an OSD in a screen a predetermined time before the power supply to the deck is turned off. Because of the constitution, an effect of giving a notice of disconnection of the power supply to the deck to a user can be obtained.

The image display device according to the invention comprises means for turning on a power supply to a deck when an input for reproduction of DVD or opening/closure of a tray is made in such state that the power supply to the deck is turned off. As a result of the constitution, in such state that a power supply to TV is turned on, and that to DVD deck is turned off, the power to the DVD deck is turned on when a user wants to use the DVD deck.

The image display device according to the invention comprises means for notifying a user that a CD is presently in reproduction by displaying an OSD in a screen when the CD is in reproduction. According to the constitution, an effect of notifying a user that the CD is presently in reproduction even though no image is contained in the CD.

The image display device according to the invention comprises means for changing location of an OSD notifying that the CD is in reproduction with time. As a result of the constitution, an effect of preventing burn of a screen can be obtained.

The invention is now described below by referring to figure 1.

Fig. 1 shows a flowchart of an operating procedure for preventing burn of a screen in image display means that comprises a CD deck, a TV receiver, image display means and screen burn preventing means.

In Fig. 1, numeral 301 is a branch of whether the CD is in reproduction or not.

Numeral 302 is a branch of whether the counter is at "10" or more or not.

Numeral 303 is a step of setting the counter at "zero".

Numeral 304 is a step of incrementation of the counter.

Numeral 305 is a step of changing an OSD display position.

Numeral 306 is a step of displaying an OSD (warning message) for indicating the CD is in reproduction.

An operation for preventing screen burn due to display of the OSD that indicates the CD is in reproduction according to above constitution is described.

In Fig. 1, when the CD is in reproduction at numeral 301, if the counter is at "10" or more at numeral 302, the counter is set at "zero" at numeral 303.

Then, a position of displaying the OSD is changed according to a value of the counter at numeral 305, and the OSD indicating the CD is now in reproduction is displayed at numeral 306.

As a result of such constitution, the user is informed that the CD is in reproduction, and no image is, therefore, displayed because the CD contains no image.

Burn of a screen due to display of the OSD for a long time during reproduction of the CD can be prevented by changing a position of displaying the OSD.

Additionally, in the case any input is made by the user during reproduction of the CD, since a TV picture may be of importance to the user, the image adjustment value is returned to the original value.

As described above, according to the invention, in a television receiver with a DVD deck incorporated therein, reproduction of a disc is discontinued when a motionless image is continuously displayed in a screen for a long time.

Further, when the DVD deck or CD deck is not used by the user for a long time, the power supply to the deck is turned "OFF" so that it is protected from being reduced faster in quality.

In the invention, as the display means, a cathode tube, a liquid crystal display device, a plasma display device or the like may be employed.

## Claims

1. An image display device comprising:
(a) first image and sound reproducing means for reproducing one of a first image and a first sound;
(b) second image and sound reproducing means for reproducing a second image;
(c) a single display means for displaying said first and second images; and
**characterised in that** the device further comprises:
(d) screen burn preventing means for functioning to discontinue reproduction of said first image when said first image comes to be stationary, and said stationary state continues for a first predetermined time or a longer time, and to cause said first image and sound reproducing means to reproduce only said first sound;
said display means is further provided with an on-screen display means; and
said on-screen display means functions to display such warning image in said display means that indicates ongoing reproduction of said first sound when said first sound is reproduced, and change positioning of said warning image at a periodic interval of a second predetermined time.

2. An image display device of claim 1, wherein said image display device further comprises protective means for functioning to turn off said first image and sound reproducing means when reproduction of said first image and sound reproducing means is paused continuously for a third predetermined time or a longer time, and
said first image and sound reproducing means is at least one of a DVD deck, a VIDEO-CD and a CD, and
wherein said protective means functions to turn on said first image and sound reproducing means in the case that
an input for opening/closure of a tray of said first image and sound reproducing means is applied by a user,
when said first image and sound reproducing means is in the OFF state.

3. An image display device of claim 1 or 2, wherein said second image and sound reproducing means is a TV set.

## Patentansprüche

1. Bildanzeigevorrichtung, umfassend:
(a) eine erste Bild- und Tonwiedergabevorrichtung für die Wiedergabe eines von einem ersten Bild und einem ersten Ton,
(b) eine zweite Bild- und Tonwiedergabevorrichtung für die Wiedergabe eines zweiten Bildes,
(c) eine einzelne Anzeigeeinrichtung für die Wiedergabe des ersten und des zweiten Bildes und **dadurch gekennzeichnet, dass** die Vorrichtung des Weiteren umfasst:
(d) eine Einrichtung zum Verhindern von Einbrennen, funktionsfähig, um die Wiedergabe des ersten Bildes zu unterbrechen, wenn das erste Bild steht und der stehende Zustand für eine erste vorgegebene Zeit oder eine längere Zeit anhält, und um die erste Bild- Und Tonwiedergabevorrichtung zu veranlassen, nur den ersten Ton wiederzugeben, und
die Anzeigevorrichtung des Weiteren mit einer Bildschirmanzeige versehen ist und die Bildschirmanzeige funktionsfähig ist, um ein derartiges Warnbild in der Anzeige anzuzeigen, dass die laufende Wiedergabe des ersten Tons anzeigt, wenn der erste Ton wiedergegeben wird, und um die Position des Warnbildes in einem periodischen Intervall einer zweiten vorgegebenen Zeit zu ändern.

2. Bildanzeigevorrichtung nach Anspruch 1, wobei die Bildanzeigevorrichtung des Weiteren eine Schutzeinrichtung umfasst, funktionsfähig, um die erste Bild- und Tonwiedergabevorrichtung auszuschalten, wenn die Wiedergabe der ersten Bild- und Tonwiedergabevorrichtung kontinuierlich für eine dritte vorgegebene Zeit oder längere Zeit pausiert, und
wobei die erste Bild- und Tonwiedergabevorrichtung wenigstens eines von einem DVD-Spieler, einer VIDEO-CD und einer CD ist, und
wobei die Schutzeinrichtung arbeitet, um die erste Bild- und Tonwiedergabevorrichtung in dem Fall einzuschalten, dass
eine Eingabe zum Öffnen/Schließen einer Ladeschale der ersten Bild- und Tonwiedergabevorrichtung durch den Benutzer erfolgt,
während die erste Bild- und Tonwiedergabevorrichtung in dem AUS-Zustand ist.

3. Bildanzeigevorrichtung nach Anspruch 1 oder 2, wobei die zweite Bild- und Tonwiedergabevorrichtung ein Fernsehgerät ist.

## Revendications

1. Dispositif d'affichage d'image comportant :
(a) des premiers moyens de reproduction d'image et de son pour reproduire l'un d'une première image et d'un premier son ;
(b) des seconds moyens de reproduction d'image et de son pour reproduire une seconde image ;
(c) un seul moyen d'affichage pour afficher lesdites premières et secondes images ; et **caractérisé en ce que** le dispositif comporte en outre ;
(d) des moyens pour empêcher une brûlure d'écran pour un fonctionnement en reproduction continue de ladite première image lorsque ladite première image reste fixe, et ledit état fixe continue pendant un premier temps prédéterminé ou un temps plus long, et pour amener lesdits premiers moyens de reproduction d'image et de son à reproduire seulement ledit premier son ;
ledit moyen d'affichage est en outre muni d'un moyen d'affichage sur écran ; et
ledit moyen d'affichage sur écran fonctionne pour afficher une image d'avertissement sur ledit moyen d'affichage qui indique une reproduction en cours dudit premier son lorsque ledit premier son est reproduit, et de changer la position de ladite image d'avertissement à un intervalle périodique d'un second temps prédéterminé.

2. Dispositif d'affichage d'image selon la revendication 1, dans lequel ledit dispositif d'affichage d'image comporte en outre des moyens protecteurs pour fonctionner lors de la coupure desdits premiers moyens de reproduction d'image et de son lorsque la reproduction desdits premiers moyens de reproduction d'image et de son est fixe continûment pendant un troisième temps prédéterminé ou un temps plus long, et
lesdits premiers moyens de reproduction d'image et de son sont au moins l'un d'une platine DVD, Vidéo-CD et CD, et
dans lequel lesdits moyens protecteurs fonctionnent pour allumer lesdits premiers moyens de reproduction d'image et de son dans le cas où
une entrée pour ouvrir/fermer un plateau desdits premiers moyens de reproduction d'image et de son est appliquée par un utilisateur,
lorsque lesdits premiers moyens de reproduction d'image et de son se trouvent dans l'état ARRET.

3. Dispositif d'affichage d'image selon la revendication 1 ou 2, dans lequel lesdits seconds moyens de reproduction d'image et de son sont un téléviseur.
